**Europäisches Patentamt**

**European Patent Office**

**Office européen des brevets**

(11) Veröffentlichungsnummer: **0 303 795 B1**

(12)

# EUROPÄISCHE PATENTSCHRIFT

(45) Veröffentlichungstag der Patentschrift:
07.08.91 Patentblatt 91/32

(51) Int. Cl.⁵ : **B60N 2/00**

(21) Anmeldenummer: **88109761.2**

(22) Anmeldetag: **18.06.88**

(54) **Kraftwagensitz.**

(30) Priorität: **19.08.87 DE 3727671**

(43) Veröffentlichungstag der Anmeldung:
**22.02.89 Patentblatt 89/08**

(45) Bekanntmachung des Hinweises auf die
Patenterteilung:
**07.08.91 Patentblatt 91/32**

(84) Benannte Vertragsstaaten:
**BE ES FR GB IT NL SE**

(56) Entgegenhaltungen:
EP-A- 0 009 654
DE-A- 2 312 209
DE-A- 3 301 708
DE-B- 1 963 335
FR-A- 2 184 325
US-A- 2 952 304

(56) Entgegenhaltungen:
US-A- 3 984 128
US-A- 4 657 121
AUTOMOTIVE ENGINEERING, Band 89, Nr. 12,
Dezember 1981, Seiten 24-31, Society of Automative Engineers, INC., Dallas, Texas, US;
"Energy-absorbing structure"

(73) Patentinhaber: DAIMLER-BENZ
AKTIENGESELLSCHAFT
Mercedesstrasse 136
W-7000 Stuttgart 60 (DE)

(72) Erfinder: Förster, Alfred
Fürstengässle 4
W-7056 Weinstadt (DE)
Erfinder: Kotzab, Johann
Beethovenstrasse 14
W-7311 Notzingen (DE)
Erfinder: Geyer, Willi
Mörikestrasse 12
W-7446 Oberboihingen (DE)

## Beschreibung

Die Erfindung betrifft einen Kraftwagensitz, der gegenüber seinem Untergestell um eine rückwärtige, in Fahrzeugquerrichtung verlaufende Achse richtungsmäßig vorbestimmt verschwenkbar ist und der sich über ein mit Abstand von der Achse angeordnetes vorderes Deformationselement am Untergestell abstützt, wobei das Deformationselement ein Verschwenken erst bei einer vorgegebenen, unfallbedingten Belastung zuläßt.

Ein derartiger Kraftwagensitz, bei dem das Deformationselement als auf Block gewundener Streckkörper ausgebildet ist, dessen Windungen beim unfallbedingten Zurückschwenken des Sitzes unter Energieabsorption auseinandergezogen werden, ist durch die DE-A-1963335 bekannt.

Aufgabe der Erfindung ist es, ein leicht an unterschiedliche Bedürfnisse anpaßbares, einfach zu montierendes und dabei kostengünstiges Deformationselement zu schaffen, das imstande ist, durch eine gezielte Kippbewegung des Sitzes unter Energieabsorption die rückseitig der Rückenlehne durch einen aufprallenden Passagier eingeleiteten Kräfte verletzungsmindernd abzubauen.

Diese Aufgabe wird durch die kennzeichnenden Merkmale des Patentanspruches 1 gelöst.

Kostenvorteile erbringt es und schwierige, den vorhandenen Platz optimal nutzende Querschnittsformen sind erreichbar, wenn der Mantel aus einem Strangpreßprofil besteht.

Die insbesondere bei einem Omnibussitz mittelgangseitig geforderte seitwärtige Verschiebemöglichkeit kann auf einfache Weise erreicht werden, wenn endseitig am Strangpreßprofil angeformte Querführungsbahnen ober- und unterseitig abragen, die von zugeordneten Aufnahmen des Untergestells einstellbar gleitbeweglich gehalten sind.

Dabei ist es vorteilhaft, wenn die obere Querführungsbahn und ihre untergestellseitige Aufnahme die Verschwenkeinrichtung für den Sitz bilden.

Ein Feuchtigkeitseintritt kann verhindert werden, wenn der Mantel stirnseitig durch leicht deformierbare, vorzugsweise aufgesteckte Wandteile zu einem rundum geschlossenen Behältnis ergänzt ist.

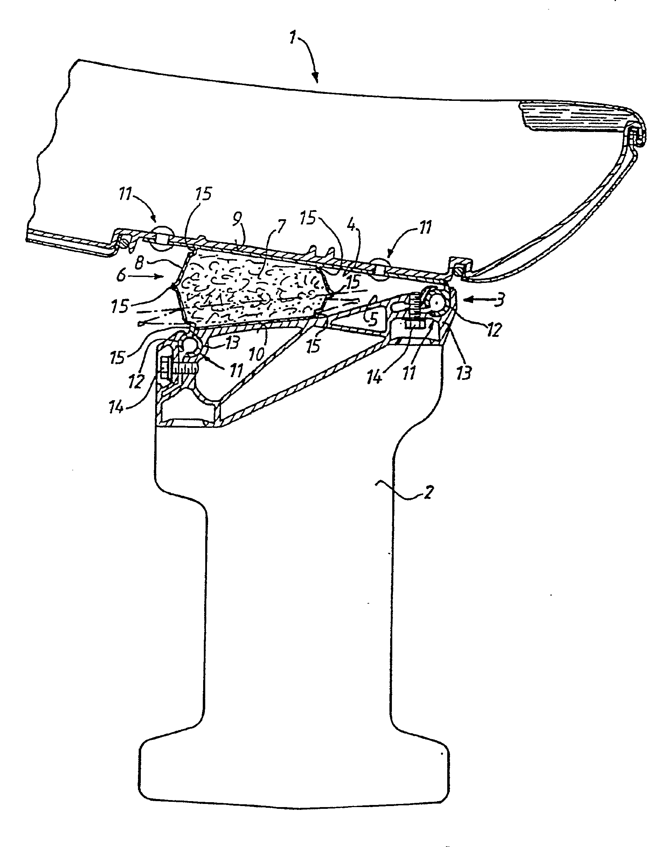

Der Gegenstand der Erfindung wird nachfolgend anhand eines in der Zeichnung dargestellten Ausführungsbeispiels näher erläutert.

Ein nicht näher dargestellter, ein Sitzkissen und eine Rückenlehne aufweisender Kraftwagensitz 1 ruht auf einem Untergestell 2. Über eine in Fahrtrichtung hinten liegende Verschwenkeinrichtung 3 läßt sich der gesamte Kraftwagen sitz 1 bei einem unfallbedingten Auftreffen eines der Rückenlehne zugeordnet sitzenden hinteren Insassen nach vorn schwenken, wobei durch ein zwischen der Sitzunterseite 4 und der Oberseite 5 des Untergestells 2 angeordnetes Deformationselement 6 die Aufprallenergie verletzungsmindernd abgebaut wird. Bei dieser Schwenkbewegung verlagert sich die Lehnenoberkante nach oben, so daß auch größere Fahrgäste sicher aufgefangen werden können.

Das Deformationselement 6 besteht aus einem unter Energieabsorption zusammendrückbaren Schaumstoffblock 7, der von einem, vorzugsweise einen Abschnitt eines Strangpreßprofils bildenden, die im normalen Fahrbetrieb auftretenden Kräfte übertragenden Mantel 8 umgeben ist. Die obere Mantelfläche 9 und die untere Mantelfläche 10 sind mit angeformten Befestigungsmöglichkeiten 11 versehen, von denen welche als Querführungsbahnen 12 ausgebildet sind und von Aufnahmen 13 des Untergestells 2 querverschieblich geführt sind. Schrauben 14 dienen der Einstellung der Querverschiebekraft, wobei bei einer Doppelsitzanordnung in einem Omnibus der fensterseitige Sitz in der Regel festgesetzt wird, während der gangseitige Sitz durch eine nicht dargestellte Einrichtung zur Vergrößerung des Sitzabstandes zum Mittelgang hin verschiebbar gehalten wird.

Am Mantel 8 des Deformationselementes 6 sind Sollbiegestellen 15 ausgeformt, die Faltlinien beim unfallbedingten Zusammendrücken des Deformationselementes 6 bilden, wobei der Energieabsorptionsanteil des Mantels 8 relativ klein ist. Ist das Deformationsvermögen erschöpft, so nimmt das Deformationselement 6 die in strichpunktierten Linien dargestellte, nach außen gefaltete Lage ein.

Damit der Schaumstoffblock 7 vor einer Feuchtigkeitsaufnahme geschützt ist, sind in nicht dargestellter Weise die stirnseitigen Mantelflächen durch leicht verformbare Deckel verschlossen, so daß sich ein nach außen hin allseits geschlossenes Behältnis ergibt.

Es wäre aber auch denkbar, den Schaumstoffblock durch eine geeignete Lackierung gegen Feuchtigkeitsaufnahme zu versiegeln.

## Patentansprüche

1. Kraftwagensitz (1), der gegenüber seinem Untergestell (2) um eine rückwärtige, in Fahrzeugquerrichtung verlaufende Achse richtungsmäßig vorbestimmt verschwenkbar ist und der sich über ein mit Abstand von der Achse angeordnetes vorderes Deformationselement (6) am Untergestell (2) abstützt, wobei das Deformationselement (6) ein Verschwenken erst bei einer vorgegebenen, unfallbedingten Belastung zuläßt, **dadurch gekennzeichnet,** daß das Deformationselement (6) als von einem Mantel (8) umgebener, energieabsorbierender Schaumstoffblock (7) ausgebildet ist und die obere und untere Mantelfläche (9 ; 10) mit Befestigungsmöglichkeiten (11) zum Festlegen an der Sitzunterseite (4) und am Untergestell (2) versehen ist, und daß der Mantel (8) Sollbiegestellen (15) aufweist, die Faltlinien beim unfallbedingten Verschwenken des Kraftwagensitzes (1) bilden.

2. Kraftwagensitz nach Anspruch 1, **dadurch gekennzeichnet,** daß der Mantel (8) aus einem Strangpreßprofil besteht.

3. Kraftwagensitz nach Anspruch 2, **dadurch gekennzeichnet,** daß endseitig am Strangpreßprofil angeformte Querführungsbahnen (12) ober- und unterseitig abragen, die von zugeordneten Aufnahmen (13) des Untergestells (2) einstellbar gleitbeweglich gehalten sind.

4. Kraftwagensitz nach Anspruch 3, **dadurch gekennzeichnet,** daß die obere Querführungsbahn (12) und ihre untergestellseitige Aufnahme (13) die Verschwenkeinrichtung (3) für den Kraftwagensitz (1) bilden.

5. Kraftwagensitz nach einem oder mehreren der vorangegangenen Ansprüche, **dadurch gekennzeichnet,** daß der Mantel (8) stirnseitig durch leicht deformierbare, vorzugsweise aufgesteckte Wandteile zu einem rundum geschlossenen Behältnis ergänzt ist.

## Claims

1. A motor vehicle seat (1) which is swivellable in predetermined manner relative to its subframe (2) around a rearward axis extending in the transversal direction of the vehicle, and which acts on a front deformation member (6) on the subframe (2) mounted spaced from the axis, the deformation member (6) not permitting a swivelling till a predetermined loading has been reached as a result of an accident, characterized in that the deformation member (6) is constructed as an energy-absorbing block (7) of foam material surrounded by a covering (8), and the upper and lower shell surface (9 ; 10) is provided with fixing possibilities (11) for securing to the underside (4) of the seat and to the subframe (2), and in that the covering (8) has set bending places (15) which constitute folding lines on the swivelling of the vehicle seat (1) resulting from an accident.

2. A motor vehicie seat according to claim 1, characterized in that the covering (8) is an extruded section.

3. A motor vehicle seat according to claim 2, characterized in that at the end of the extruded section moulded-on transversal guideways (12) protrude from the top and bottom, being held adjustably slidingly by associated receiving parts (13) of the subframe (2).

4. A motor vehicle seat according to claim 3, characterized in that the upper transversal guideway (12) and its receiving part (13) on the subframe constitute the swivelling arrangement (3) for the motor vehicle seat (1).

5. A motor vehicle seat according to one or more of the foregoing claims, characterized in that the covering (8) is extended at the front by easily deformable, preferably mounted-on wall parts to form an all-round closed container.

## Revendications

1. Siège (1) de véhicule automobile, qui est capable de pivotement directionnellement prédéterminé par rapport à son bâti de support (2), autour d'un axe s'étendant à l'arrière dans la direction transversale du véhicule, et qui s'appuie sur le bâti de support (2) par l'intermédiaire d'un élément avant de déformation (6) disposé à distance de l'axe, l'élément de déformation (6) n'autorisant un pivotement qu'en présence d'une contrainte prédéterminée, provoquée par un accident, **caractérisé** en ce que l'élément de déformation (6) est réalisé sous forme du bloc en matériau alvéolaire (7) absorbant de l'énergie et entouré d'une enveloppe (8), et la face supérieure et la face inférieure (9 ; 10) de l'enveloppe sont munies de moyens de fixation (11) pour les fixer respectivement au dessous (4) du siège et au bâti de support (2), et en ce que l'enveloppe (8) présente des zones de fléchissement privilégié (15), qui constituent des lignes de pliage lors d'un pivotement du siège (1) provoqué par un accident.

2. Siège de véhicule automobile selon la revendication 1, caractérisé en ce que l'enveloppe (8) est constituée d'un profilé extrudé.

3. Siège de véhicule automobile selon la revendication 2, caractérisé en ce que des glissières de guidage transversal (12), formées aux extrémités du profilé extrudé, dépassent en haut et en bas, et sont maintenues mobiles en coulissement, de manière réglable, par des logements associés (13) du bâti de support (2).

4. Siège de véhicule automobile selon la revendication 3, caractérisé en ce que la voie de guidage transversal (12) supérieure, et son logement (13) du bâti de support, constituent le mécanisme de pivotement (3) pour le siège (1).

5. Siège de véhicule automobile selon une ou plusieurs des revendications précédentes, caractérisé en ce que l'enveloppe (8) est complétée, sur le côté frontal, par des éléments de paroi facilement déformables, de préférence emboîtés, afin de former un réceptacle fermé de tous côtés.